# EUROPEAN PATENT APPLICATION

(11) **EP 0 678 704 A1**
(43) Date of publication of application: **25.10.1995**
(21) Application number: 95104928.7
(22) Date of filing: 03.04.1995
(51) Int. Cl.: F21S 1/10, F21V 8/00

(54) **Lamp-post for road lighting**

(30) Priority: 06.04.1994 IT BO940070 U
(71) Applicant: INFODATA S.a.s. di PICCIAFOCO ROBERTO & C., I-50028 Tavernelle Val di Pesa, Firenze (IT)
(72) Inventor: Picciafoco, Italo, I-50020 Sambuca Val di Pesa (Firenze) (IT)
(74) Representative: Modiano, Guido, Dr.-Ing.

(57) **Abstract**

A lamp-post for road lighting, comprising a post (1) that supports a mounting fixture (9) at its upper end, a light source (5), which is accommodated at the base of the post (1), and a bundle of optical fibers (6), which are optically coupled to the light source (5) and run inside the post (1) up to the mounting fixture (9), the ends (8) of the optical fibers (6) being orientated towards the ground so as to illuminate the underlying area.

## Description

The present invention relates to a lamp-post for road lighting.

Conventional lamp-posts for road lighting are constituted by a post the top whereof overhangs the road and supports the mounting fixture containing the light source, for example a mercury-vapor lamp and the like. The light source is powered by means of an electric conductor that passes through the post from the base up to the mounting fixture.

Known lamp-posts entail considerable problems when it is necessary to work on the lamp, for example for its periodic maintenance or in case of replacement. In this case it is in fact necessary to work with a truck that is equipped with a ladder and with at least two operators, with consequent labor and equipment costs. Furthermore, since that work must be carried out several meters above the ground, in addition to the hardly negligible corresponding risks, the execution time unavoidably increases. Furthermore, lamp-posts are often located in places that cannot be easily accessed by certain trucks, and it is accordingly necessary to have other kinds of equipment in order to be able to work.

A principal aim of the present invention is to provide a lamp-post that is capable of obviating the above described problems, typical of conventional lamp-posts, and is conceived such as to no longer require intervention on the mounting fixture when it is necessary to maintain or replace the light source.

This aim is achieved with a lamp-post for road lighting, which comprises a post that supports a mounting fixture at its upper end and is characterized in that it comprises a light source, accommodated at the base of the post, and a bundle of optical fibers, optically coupled to said light source and running inside said post up to the mounting fixture, the ends of said optical fibers being orientated towards the ground so as to illuminate the underlying area.

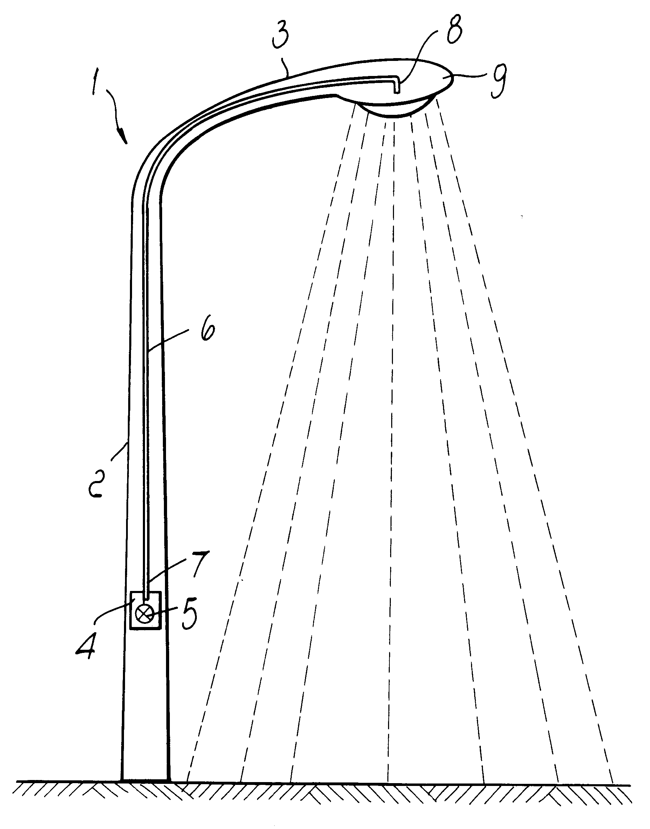

Further characteristics and advantages of the invention will become apparent from the following detailed description of a preferred embodiment thereof, illustrated only by way of non-limitative example in the accompanying drawing, wherein:
the only figure is a partially schematic view of a lamp-post for road lighting according to the present invention.

With reference to the figure, the lamp-post comprises a tubular post 1, obtained from a metal pipe or made of cement, which is driven into the ground and is composed of a vertical portion 2 connected to a portion 3 that protrudes in a cantilevered manner over the region to be illuminated.

A seat 4 is formed at the base of the portion 2 and can be closed by means of a door, not shown; said seat accommodates a light source 5, constituted for example by a halogen lamp, that is powered by means of conductors by an underground electric line.

A bundle of optical fibers 6 runs upwards from the seat 4 inside the portions 2 and 3.

The optical fibers 6 are optically coupled, with one end 7, to the lamp 5 and their opposite end 8 is located at a mounting fixture 9 that is mounted at the end of the cantilevered portion 3 of the post.

The end 8 of the optical fibers is directed downwards. In this manner, by switching on the lamp 5, the light, guided by the optical fibers, is directed towards the ground to illuminate the intended area.

It is evident that the described invention fully achieves the intended aim. In particular, inspection or replacement of the lamp 5, by requiring only work at ground level, does not require special equipment and can be performed in full safety.

Numerous solutions are possible in the practical embodiment of the invention, and all are within the scope of the same inventive concept.

For example, it is possible to provide adapted optical means for the coupling between the lamp and the optical fibers. Likewise, it is possible to use a reflector, provided with an adequate optical diffusion system, to guide the light when it exits from the bundle of optical fibers.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Lamp-post for road lighting, which comprises a post (1) that supports a mounting fixture (9) at its upper end and is characterized in that it comprises a light source (5), which is accommodated at the base of the post (1), and a bundle of optical fibers (6), optically coupled to said light source (5) and running inside said post up to the mounting fixture (9), the ends (8) of said optical fibers (6) being orientated towards the ground so as to illuminate the underlying area.

2. Lamp-post for road lighting, which comprises a post (1) that supports a mounting fixture (9) at its upper end and is characterized in that it comprises a light source (5), which is accommodated at the base of the post (1), and a bundle of optical fibers (6), which are optically coupled to said light source (5) and run inside said post (1) up to the mounting fixture (9), optical means being furthermore provided, said means being arranged inside said mounting fixture and being adapted to direct the light beam towards the underlying area.

3. Lamp-post according to claim 1 or 2, characterized in that optical coupling means are interposed between said light source (5) and the adjacent end (7) of said bundle (6).

4. Lamp-post according to one or more of the preceding claims, characterized in that a reflector is placed in said mounting fixture (9) and has an optical system for the diffusion of the light beam.
